# EUROPEAN PATENT APPLICATION

(11) **EP 4 527 778 A1**
(43) Date of publication of application: **26.03.2025**
(21) Application number: 23806501.5
(22) Date of filing: 09.01.2023
(51) Int. Cl.: B66B 11/04, B66B 11/08, B66B 17/12, H02K 7/116

(54) **ELEVATOR PULLED BY DUAL-MOTOR DRIVE DEVICE**

(30) Priority: 20.05.2022 CN 202210554038
(71) Applicant: Shanghai Mitsubishi Elevator Co., Ltd., Shanghai 200245 (CN)
(72) Inventor: LI, Wei, Shanghai 200245 (CN); LI, Jie, Shanghai 200245 (CN); LEI, Yinan, Shanghai 200245 (CN)
(74) Representative: Bjerkén Hynell KB
(86) International application number: PCT/CN2023/071271
(87) International publication number: WO 2023/221539

(57) **Abstract**

An elevator pulled by a dual-motor drive device, comprising: a ascent and descent space (1001); a cage (1002) and a counterpoise (1003) that ascend and descend in the ascent and descent space (1001); a traction rope (1104) that suspends the cage (1002) and the counterpoise (1003); a first motor drive device (1); and a second motor drive device (2001). The first motor drive device (1) is provided with a first motor (10) and a first gear assembly (2); the second motor drive device (2001) is provided with a second motor (2010) and a second gear assembly (2002); in the axial direction of a traction rope wheel (30), the traction rope wheel (30) is located between the first motor drive device (1) and the second motor drive device (2001); torque generated by the first motor (10) of the first motor drive device (1) and torque generated by the second motor (2010) of the second motor drive device (2001) are transmitted to the traction rope wheel (30) by means of the first gear assembly (2) and the second gear assembly (2002) respectively, so as to drive the traction rope wheel (30) to rotate. The dual-motor drive device can be used for outputting high torque so as to increase the traction force of the traction rope, and thus may meet the demand for expanding an application scenario of a heavy-load elevator.

## Description

### TECHNICAL FIELD

The present disclosure relates to the field of elevators, and in particular to an elevator lifted by a dual-motor drive apparatus.

### BACKGROUND

A traction rope with a large diameter is usually used in an application scenario of lifting an elevator with a large load capacity, so as to satisfy the requirement for a lifting force and to ensure that the traction rope has a sufficient service life. According to the stipulation in section 5.5.2 of Chinese elevator standard GB/T 7588.1-2020, the ratio (D/d) of the diameter D of a traction sheave pitch circle such as a traction wheel, a pulley, or a reel to the diameter d of the traction rope (suspended steel rope) should not be less than 40. Therefore, upon the use of the traction rope with a large diameter, a corresponding traction sheave with a large pitch circle diameter needs to be adopted, which requires a drive apparatus to be capable of outputting a large torque.

A dual-motor drive apparatus may be used to output a large torque. For example, Chinese patent bulletin CN1092132C discloses a dual-motor drive apparatus, where a traction sheave is disposed between two motors, and rotors of the two motors directly drive the sheave. In order to output a large torque, the two rotors each has a diameter greater than that of the sheave, making both motors have large sizes, resulting in a large size of the drive apparatus. The two motors each use an axial magnetic field, which requires additional provision of an adjustment apparatus for adjusting the position of each rotor relative to a frame (stator). Adjustment needs to be performed with best efforts to make the two motors have the same air gap, so as to reduce an adverse effect of an imbalance between axial magnetic field forces of the two motors. Adjustment needs to be performed with best efforts to make the two motors be in the same electric driving, resulting in complicated assembling and high cost of the drive apparatus.

The large size of the drive apparatus increases the difficulty in producing parts of the drive apparatus. Meanwhile, the drive apparatus with a large size takes up a large space of a site for using the elevator, and brings much trouble in on-site transfer, installation, maintenance, etc. of the elevator. The complicated assembling of the drive apparatus causes a reduction in production efficiency, resulting in an increase in production costs.

### BRIEF SUMMARY

The technical problem to be solved by the present disclosure is to provide an elevator lifted by a dual-motor drive apparatus, which uses the miniaturized dual-motor drive apparatus to output a large torque, where a traction sheave with a large diameter and a traction rope with a large diameter are used to enhance a lifting force of the traction rope, thus satisfying the requirement of an application scenario of lifting an elevator with a large load capacity. The use of the miniaturized dual-motor drive apparatus not only reduces an occupied space, which facilitates transfer, installation arrangement, and maintenance, but also brings much convenience to the production of parts, which is conducive to the saving of raw materials and the reduction of machining time. Moreover, the motor uses a cylindrical structure with a radial magnetic field, eliminating time required for adjusting an axial magnetic field force during assembling, reducing the complexity of assembling the parts, and reducing the production cost of the assembling.

In order to solve the above technical problems, the present disclosure provides an elevator lifted by a dual-motor drive apparatus, which includes:
a car and a counterweight disposed as being lifted in a lifting space; a traction rope suspending the car and the counterweight; a traction sheave driven to perform a rotation motion by a first motor drive apparatus and a second motor drive apparatus arranged on both sides thereof, so as to drive the traction rope to lift the car and the counterweight;
a first motor drive apparatus having a first motor and a first gear assembly; and
a second motor drive apparatus having a second motor and a second gear assembly,
where the traction sheave is located between the first motor drive apparatus and the second motor drive apparatus in an axial direction of the traction sheave; a torque generated by the first motor of the first motor drive apparatus and a torque generated by the second motor of the second motor drive apparatus are both transmitted to the traction sheave respectively via the first gear assembly and the second gear assembly, so as to drive the traction sheave to perform the rotation motion.

In some examples, the traction sheave combined with the traction rope has a traction sheave pitch circle; and
projections of each transmission gear of the first gear assembly and each transmission gear of the second gear assembly in the axial direction of the traction sheave are both configured in a region enclosed by a projection of the traction sheave pitch circle in the axial direction of the traction sheave.

In some examples, an axis of each transmission gear of the first gear assembly and an axis of each transmission gear of the second gear assembly are both parallel to an axis of the traction sheave.

In some examples, an axis of each transmission gear of the first gear assembly and an axis of each transmission gear of the second gear assembly are both stationary relative to and parallel to an axis of the traction sheave.

In some examples, an axis of each transmission gear of the first gear assembly and an axis of each transmission gear of the second gear assembly are both stationary relative to and parallel to an axis of the traction sheave; and projections of the axis of each transmission gear of the first gear assembly and the axis of each transmission gear of the second gear assembly in the axial direction of the traction sheave are configured in the region enclosed by the projection of the traction sheave pitch circle in the axial direction of the traction sheave.

In some examples, in the axial direction of the traction sheave, each transmission gear of the first gear assembly is located between the traction sheave and the first motor; and
in the axial direction of the traction sheave, each transmission gear of the second gear assembly is located between the traction sheave and the second motor;

In some examples, the axis of each transmission gear of the first gear assembly and the axis of each transmission gear of the second gear assembly are both helical gears.

In some examples, the second motor drive apparatus and the first motor drive apparatus have the same structure;
the second motor and the first motor have the same structure; and
the second gear assembly and the first gear assembly have the same structure.

In some examples, the first gear assembly has N transmission gears, and axes of the N transmission gears are not in the same plane and are spatially arranged in three dimensions, N being an integer greater than 2.

In some examples, the first motor drive apparatus further has a first gear box, each transmission gear of the first gear assembly is configured in the first gear box, and the first gear box supports rotation of each transmission gear of the first gear assembly.

In some examples, the first gear assembly comprises an input transmission gear, an output transmission gear, a first intermediate transmission gear, and a second intermediate transmission gear;
the input transmission gear is provided with an input rotation shaft, and the input rotation shaft is provided with a first bearing and a second bearing;
the output transmission gear is provided with an output rotation shaft, and the output rotation shaft is provided with a third bearing and a fourth bearing;
the first intermediate transmission gear, the second intermediate transmission gear, and an intermediate transmission rotation shaft are coaxially connected to one another and rotate together;
the intermediate transmission rotation shaft is provided with a fifth bearing and a sixth bearing; and
the first gear box supports rotation of each rotation shaft via a bearing of each rotation shaft.

In some examples, the first motor uses a cylindrical structure with a radial magnetic field and has a stationary portion and a rotation portion; the rotation portion of the first motor and the input transmission gear of the first gear assembly are coaxially connected to one another and rotate together, the traction sheave and the output transmission gear of the first gear assembly are coaxially connected to one another and rotate together, and a rotation speed of the traction sheave is less than a rotation speed of the rotation portion of the first motor.

In some examples, the number of teeth of the input transmission gear is less than the number of teeth of a transmission gear that meshes with the input transmission gear, and the number of teeth of the output transmission gear is greater than the number of teeth of a transmission gear that meshes with the output transmission gear.

In some examples, a projection of the rotation portion of the first motor in the axial direction of the traction sheave is configured in the region enclosed by the projection of the traction sheave pitch circle in the axial direction of the traction sheave.

In some examples, the stationary portion of the first motor has a coil, and a projection of the coil in the axial direction of the traction sheave is configured in the region enclosed by the projection of the traction sheave pitch circle in the axial direction of the traction sheave.

The elevator lifted by a dual-motor drive apparatus of the present disclosure uses the miniaturized dual-motor drive apparatus to output a large torque, where the traction sheave with a large diameter and the traction rope with a large diameter may be used under the stipulation in Chinese elevator standard GB/T 7588.1-2020 that the ratio (D/d) of the diameter of the traction sheave pitch circle to the diameter of the traction rope should not be less than 40, so as to enhance a lifting force of the traction rope and ensure that the traction rope has a sufficient service life, thus satisfying the requirement of an application scenario of lifting the elevator with a large load capacity. The use of the miniaturized dual-motor drive apparatus not only reduces an occupied space, which facilitates transfer, installation arrangement, and maintenance, but also brings much convenience to the production of parts, which is conducive to the saving of raw materials and the reduction of machining time. Moreover, the motor uses a cylindrical structure with a radial magnetic field, eliminating time required for adjusting an axial magnetic field force during assembling, reducing the complexity of assembling the parts, and reducing the production cost of the assembling. In addition, the miniaturized dual-motor drive apparatus reduces an occupied space of a civil construction and brings much convenience to on-site transfer, installation, maintenance, etc. of the elevator.

### BRIEF DESCRIPTION OF THE DRAWINGS

In order to more clearly explain the technical solutions of the present disclosure, the drawings required to be used in the present disclosure will be briefly described below. It is obvious that the drawings described below are merely some embodiments of the present disclosure, and those skilled in the art could also obtain other drawings on the basis of these drawings without the exercise of inventive effort.
FIG. 1 is a three-dimensional schematic diagram of an embodiment of an elevator lifted by a dual-motor drive apparatus according to the present disclosure;
FIG. 2 is a three-dimensional schematic diagram of a first motor and a first gear assembly of a first motor drive apparatus, a traction sheave, and a second motor drive apparatus in FIG. 1;
FIG. 3 is a three-dimensional schematic diagram of the first motor and the first gear assembly of the first motor drive apparatus, the traction sheave, a traction rope, and the second motor drive apparatus in FIG. 1;
FIG. 4 is a C-C sectional view of FIG. 3;
FIG. 5 is a three-dimensional schematic diagram of a configuration of the first motor drive apparatus, the traction sheave, and the second motor drive apparatus in FIG. 1;
FIG. 6 is a rear view of the first motor drive apparatus, the traction sheave, and the second motor drive apparatus in FIG. 1;
FIG. 7 is a side view of the first motor and the first gear assembly of the first motor drive apparatus, the traction sheave, and the second motor drive apparatus in FIG. 1;
FIG. 8 is a A-A sectional view of FIG. 7;
FIG. 9 is a B-B sectional view of FIG. 7; and
FIG. 10 is a three-dimensional schematic diagram of the first motor drive apparatus in FIG. 5 omitting a first gear box.

List of reference numerals:
1 First motor drive apparatus; 2 first gear assembly; 10 first motor; 11 stationary portion of the first motor; 12 rotation portion of the first motor; 20 first gear box; 21 input rotation shaft; 22 output rotation shaft; 23 intermediate transmission rotation shaft; 30 traction sheave; 110 motor housing; 111 stator core; 112 coil; 210 input transmission gear; 211 axis of the input rotation shaft; 212 first bearing; 213 second bearing; 220 output transmission gear; 221 axis of the output rotation shaft; 222 third bearing; 223 fourth bearing; 230 first intermediate transmission gear; 231 second intermediate transmission gear; 232 axis of the transmission rotation shaft; 233 fifth bearing; 234 sixth bearing; 310 traction sheave pitch circle; 320 axis of the traction sheave 1000 elevator; 1001 lifting space; 1002 car; 1003 wheel; 1008 car-side traction rope termination apparatus; 1009 counterweight-side traction rope termination apparatus; 2001 second motor drive apparatus; 2002 second gear assembly; 2010 second motor; D diameter of the traction sheave pitch circle; d diameter of the traction rope.

### DETAILED DESCRIPTION

The technical solutions of the present disclosure will be clearly and completely described below with reference to the drawings. Obviously, the described embodiments are part of the embodiments of the present disclosure, rather than all of them. Based on the embodiments in the present disclosure, all other embodiments obtained by those skilled in the art without the exercise of inventive effort shall fall into the protection scope of the present disclosure.

### Embodiment I

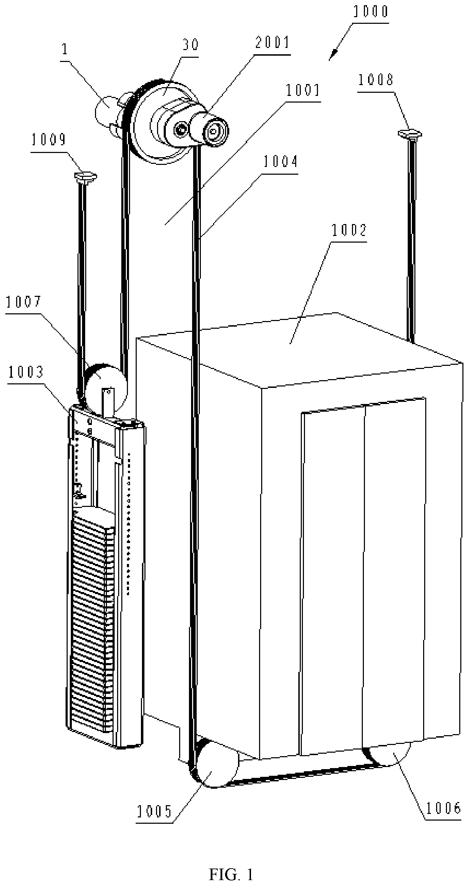

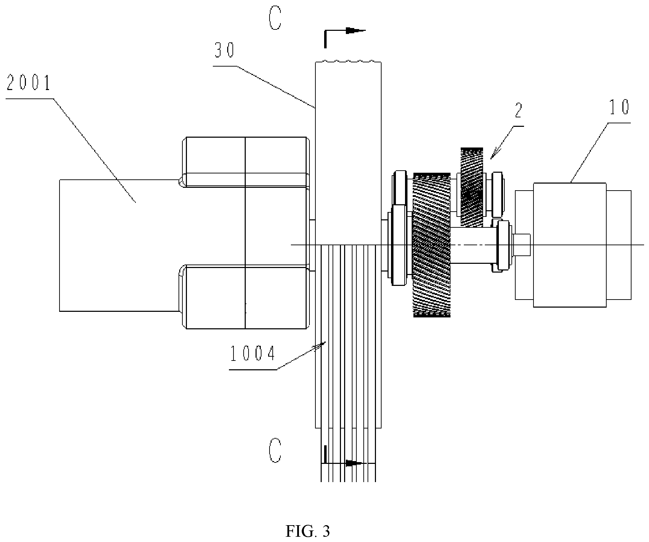

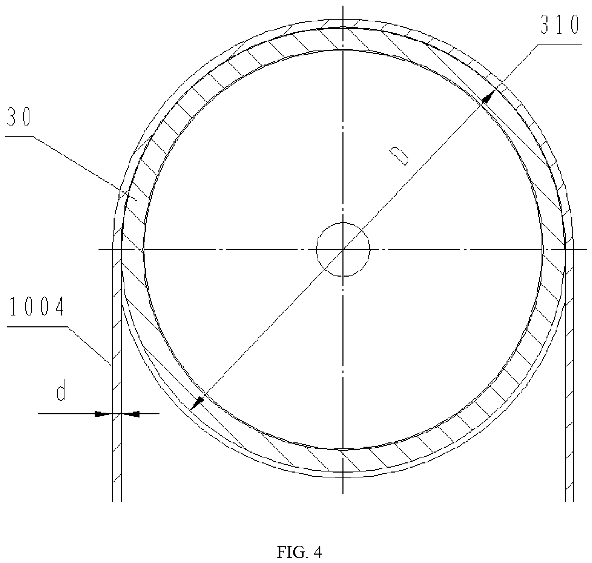

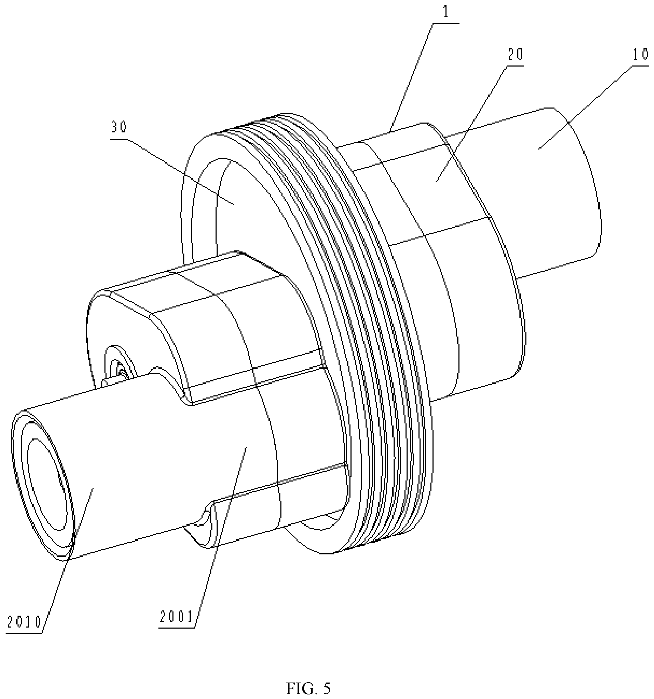

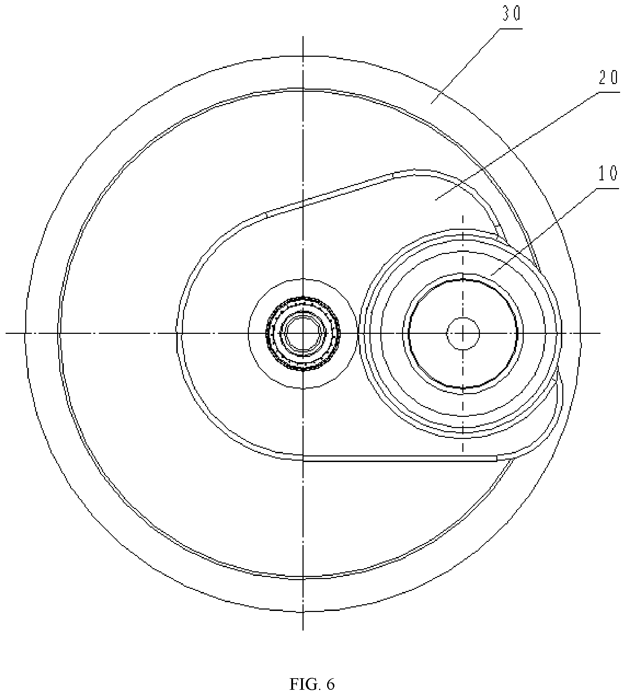

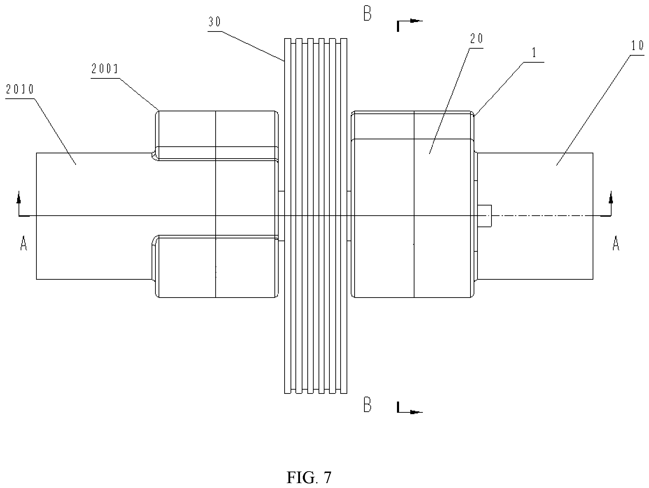

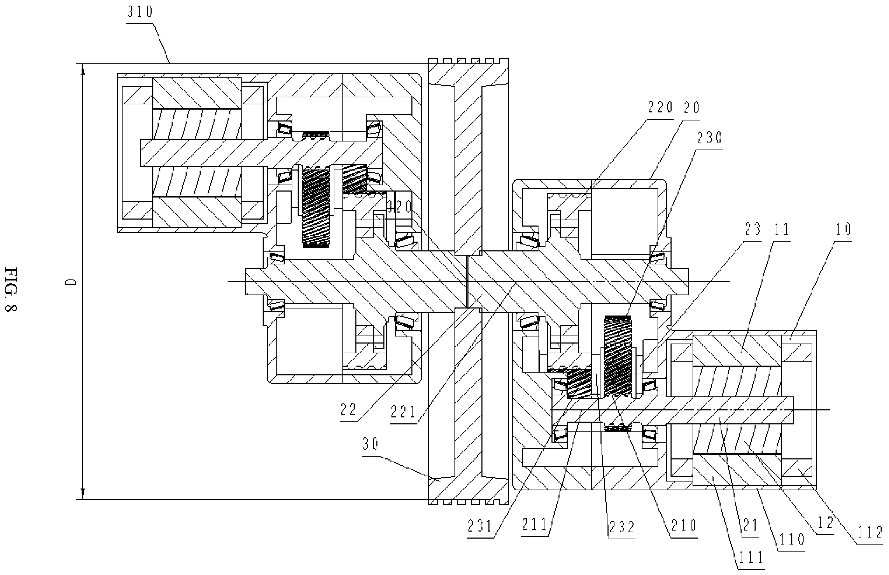

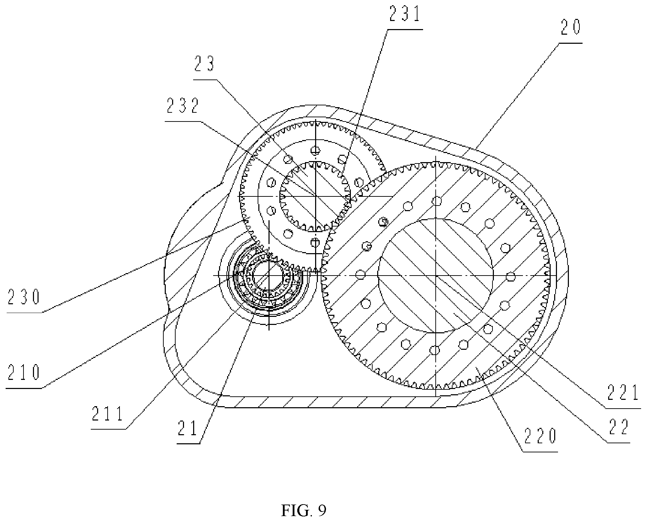

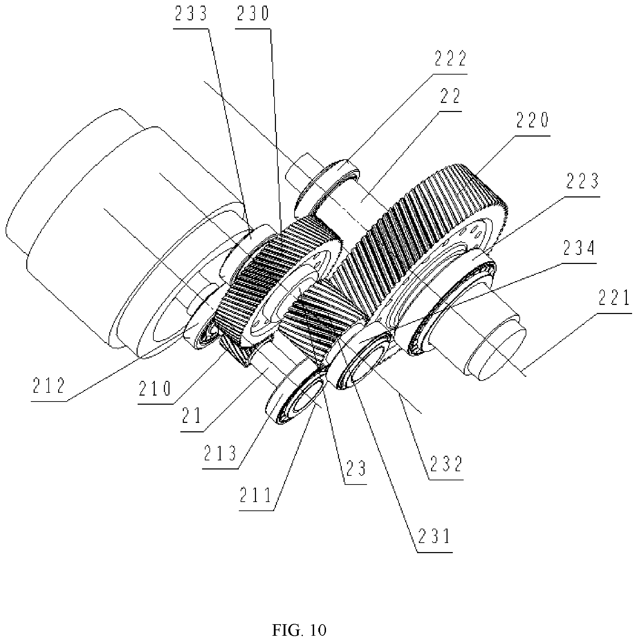

Referring to FIGs. 1-10, an elevator lifted by a dual-motor drive apparatus includes:
a lifting space (1001);
a car (1002) and a counterweight (1003) lifted in the lifting space;
a traction rope (1004) suspending the car (1002) and the counterweight (1003);
the traction sheave (30) that is combined with the traction rope (1004) and that has a traction sheave pitch circle (310), where a rotation motion of the traction sheave (30) lifts the car (1002) and counterweight (1003) via the traction rope (1004);
a first motor drive apparatus (1) having a first motor (10) and a first gear assembly (2); and
a second motor drive apparatus (2001) having a second motor (2010) and a second gear assembly (2002),
where the traction sheave (30) is located between the first motor drive apparatus (1) and the second motor drive apparatus (2001) in an axial direction of the traction sheave (30); a torque generated by the first motor (10) of the first motor drive apparatus and a torque generated by the second motor (2010) of the second motor drive apparatus are both transmitted to the traction sheave (30) respectively via the first gear assembly (2) and the second gear assembly (2002), so as to drive the traction sheave (30) to perform the rotation motion.

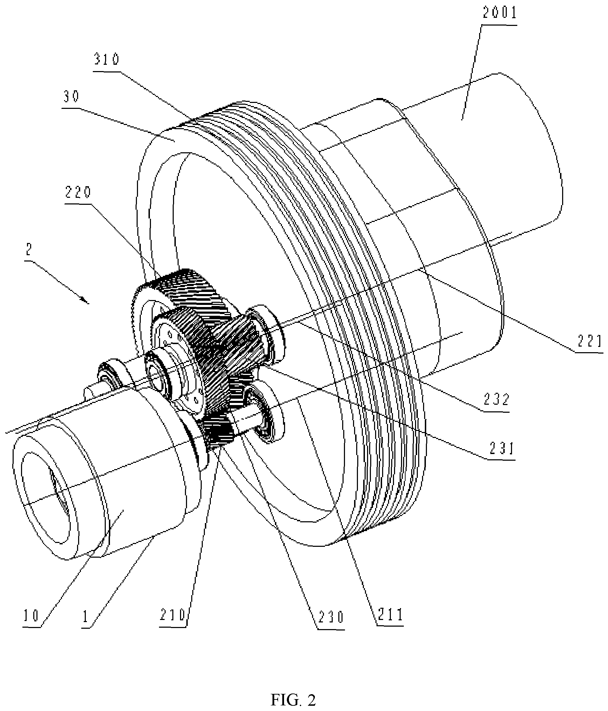

Referring to FIGs. 2-4, the diameter of the traction sheave pitch circle 310 is D, and the diameter of the traction rope 1004 is d. In some examples, the ratio D/d of diameters should not be less than 40. Through the combination of the traction rope 1004 and the traction sheave 30, the rotation motion of the traction sheave 30 is converted into a lifting motion of the car 1002 and the counterweight 1003.

In some examples, projections of each transmission gear of the first gear assembly (2) and each transmission gear of the second gear assembly (2002) in the axial direction of the traction sheave (30) are both configured in a region enclosed by a projection of the traction sheave pitch circle (310) in the axial direction of the traction sheave (30).

In some examples, an axis of each transmission gear of the first gear assembly (2) and an axis of each transmission gear of the second gear assembly (2002) are both stationary relative to and parallel to an axis (320) of the traction sheave (30).

In the axial direction of the traction sheave (30), each transmission gear of the first gear assembly (2) is located between the traction sheave (30) and the first motor (10); and
in the axial direction of the traction sheave (30), each transmission gear of the second gear assembly (2002) is located between the traction sheave (30) and the second motor (2010);

In some examples, the axis of each transmission gear of the first gear assembly (2) and the axis of each transmission gear of the second gear assembly (2002) are both helical gears.

In the elevator lifted by a dual-motor drive apparatus of this embodiment, a compact arrangement of the drive apparatus is implemented by reasonably arranging the two motors, the two gear assemblies, and the traction sheave, and the use of helical gears for transmission facilitates outputting a stable, large torque by the drive apparatus, which is conducive to miniaturization of the drive apparatus. The miniaturized drive apparatus not only reduces an occupied space, which facilitates transfer, installation arrangement, and maintenance, but also brings much convenience to the production of parts, which is conducive to the saving of raw materials and the reduction of machining and assembling time, thereby reducing production costs of the parts.

### Embodiment II

This embodiment differs from embodiment I as follows:
Referring to FIGs. 1-10, an axis of each transmission gear of the first gear assembly (2) and an axis of each transmission gear of the second gear assembly (2002) are both stationary relative to and parallel to an axis (320) of the traction sheave (30); and projections of the axis of each transmission gear of the first gear assembly (2) and the axis of each transmission gear of the second gear assembly (2002) in the axial direction of the traction sheave (30) are configured in the region enclosed by the projection of the traction sheave pitch circle (310) in the axial direction of the traction sheave (30).

In the elevator lifted by a dual-motor drive apparatus of this embodiment, the dual-motor drive apparatus can be further miniaturized through a further reasonable configuration of each transmission gear of the gear assembly and a miniaturization design of the drive transmission.

### Embodiment III

Referring to FIGs. 1-10, in the elevator lifted by a dual-motor drive apparatus based on Embodiment I, the second motor drive apparatus (2001) and the first motor drive apparatus (1) have the same structure;
the second motor (2010) and the first motor (10) have the same structure; and
the second gear assembly (2002) and the first gear assembly (2) have the same structure.

In the elevator lifted by a dual-motor drive apparatus of this embodiment, the number of different parts may be reduced through the use of the two motor drive apparatuses of the same structure, the two motors of the same structure, and the two gear assemblies of the same structure, facilitating the production and assembling of the parts, reducing the production costs, and facilitating on-site operations such as maintenance and replacement.

### Embodiment IV

Referring to FIGs. 1-10, in the elevator lifted by a dual-motor drive apparatus based on Embodiment III, the first gear assembly (2) has N transmission gears, and axes of the N transmission gears are not in the same plane and are spatially arranged in three dimensions, N being an integer greater than 2.

The first motor drive apparatus (1) further has a first gear box (20), each transmission gear of the first gear assembly (2) is configured in the first gear box (20), and the first gear box (20) supports rotation of each transmission gear of the first gear assembly (2).

The first gear assembly (2) comprises an input transmission gear (210), an output transmission gear (220), a first intermediate transmission gear (230), and a second intermediate transmission gear (231);
the input transmission gear (210) is provided with an input rotation shaft (21), and the input rotation shaft (21) is provided with a first bearing (212) and a second bearing (213);
the output transmission gear (220) is provided with an output rotation shaft (22), and the output rotation shaft (22) is provided with a third bearing (222) and a fourth bearing (223);
the first intermediate transmission gear (230), the second intermediate transmission gear (231), and an intermediate transmission rotation shaft (23) are coaxially connected to one another and rotate together;
the intermediate transmission rotation shaft (23) is provided with a fifth bearing (233) and a sixth bearing (234); and
the first gear box (20) supports rotation of each rotation shaft via a bearing of each rotation shaft.

The number of teeth of the input transmission gear (210) is less than the number of teeth of a transmission gear that meshes with the input transmission gear (210), and the number of teeth of the output transmission gear (220) is greater than the number of teeth of a transmission gear that meshes with the output transmission gear (220), so as to implement deceleration and an increase of an output torque.

In the elevator lifted by a dual-motor drive apparatus of this embodiment, a gear arrangement space is reduced through a three-dimensional arrangement of the gear assembly, implementing a compact arrangement of gear positions, and the output torque is increased via a reduction gear assembly, which is conducive to miniaturization of the motor and further miniaturization of the drive apparatus.

### Embodiment V

Referring to FIGs. 1-10, in the elevator lifted by a dual-motor drive apparatus based on Embodiment IV, the first motor (10) uses a cylindrical structure with a radial magnetic field and has a stationary portion (11) and a rotation portion (12); the rotation portion (12) of the first motor and the input transmission gear (210) of the first gear assembly (2) are coaxially connected to one another and rotate together, the traction sheave (30) and the output transmission gear (220) of the first gear assembly (2) are coaxially connected to one another and rotate together, and a rotation speed of the traction sheave (30) is less than a rotation speed of the rotation portion (12) of the first motor.

A projection of the rotation portion (12) of the first motor in the axial direction of the traction sheave (30) is configured in the region enclosed by the projection of the traction sheave pitch circle (310) in the axial direction of the traction sheave (30).

The stationary portion (11) of the first motor has a stator core (111) and a coil (112), and a projection of the coil (112) in the axial direction of the traction sheave (30) is configured in the region enclosed by the projection of the traction sheave pitch circle (310) in the axial direction of the traction sheave (30).

In some examples, the stationary portion 11 of the motor has a motor housing 111, where the motor housing 111 and the first gear box 20 are designed integrally.

When the coil 112 is energized, the stationary portion 11 of the first motor generates an electromagnetic field that drives the rotation portion 12 of the first motor, and an output torque is transferred to the traction sheave 30 via the input rotation shaft 21, the input transmission gear 210, the first intermediate transmission gear 230, the intermediate transmission rotation shaft 23, the second intermediate transmission gear 231, the output transmission gear 220, and the output rotation shaft 22.

The second motor (2010) and the first motor (10) have the same structure; and the second gear assembly (2002) and the first gear assembly (2) have the same structure. In a manner the same as the above torque transfer manner, a torque generated by the second motor (2010) is also transferred to the traction sheave (30) via the second gear assembly (2002), so as to jointly drive the traction sheave (30) to perform the rotation motion.

In the elevator lifted by a dual-motor drive apparatus of this embodiment, the two motors each use a cylindrical structure with a radial magnetic field, eliminating time required for adjusting an axial magnetic field force during assembling, reducing the complexity of assembling the parts, and reducing the production cost of the assembling. In addition, the drive apparatus is further miniaturized by using miniaturized parts of the motor.

The above descriptions are merely examples of the embodiments of the present disclosure and are not intended to limit the present disclosure. Any modifications, equivalent substitutions, improvements, etc. made within the spirit and principles of the present disclosure shall be included within the protection scope of the present disclosure.

## Claims

1. An elevator lifted by a dual-motor drive apparatus, comprising:
a car (1002) and a counterweight (1003) disposed as being lifted in a lifting space (1001);
a traction rope (1004) suspending the car (1002) and the counterweight (1003);
a traction sheave (30) driven to perform a rotation motion by a first motor drive apparatus (1) and a second motor drive apparatus (2001) arranged on both sides thereof, so as to drive the traction rope (1004) to lift the car (1002) and the counterweight (1003);
a first motor drive apparatus (1) having a first motor (10) and a first gear assembly (2); and
a second motor drive apparatus (2001) having a second motor (2010) and a second gear assembly (2002),
wherein the traction sheave (30) is located between the first motor drive apparatus (1) and the second motor drive apparatus (2001) in an axial direction of the traction sheave (30); a torque generated by the first motor (10) of the first motor drive apparatus and a torque generated by the second motor (2010) of the second motor drive apparatus are both transmitted to the traction sheave (30) respectively via the first gear assembly (2) and the second gear assembly (2002), so as to drive the traction sheave (30) to perform the rotation motion.

2. The elevator lifted by a dual-motor drive apparatus according to claim 1, wherein
the traction sheave (30) combined with the traction rope (1004) has a traction sheave pitch circle (310); and
projections of each transmission gear of the first gear assembly (2) and each transmission gear of the second gear assembly (2002) in the axial direction of the traction sheave (30) are both configured in a region enclosed by a projection of the traction sheave pitch circle (310) in the axial direction of the traction sheave (30).

3. The elevator lifted by a dual-motor drive apparatus according to claim 2, wherein
an axis of each transmission gear of the first gear assembly (2) and an axis of each transmission gear of the second gear assembly (2002) are both parallel to an axis (320) of the traction sheave (30).

4. The elevator lifted by a dual-motor drive apparatus according to claim 2, wherein
an axis of each transmission gear of the first gear assembly (2) and an axis of each transmission gear of the second gear assembly (2002) are both stationary relative to and parallel to an axis (320) of the traction sheave (30).

5. The elevator lifted by a dual-motor drive apparatus according to claim 1, wherein
an axis of each transmission gear of the first gear assembly (2) and an axis of each transmission gear of the second gear assembly (2002) are both stationary relative to and parallel to an axis (320) of the traction sheave (30); and projections of the axis of each transmission gear of the first gear assembly (2) and the axis of each transmission gear of the second gear assembly (2002) in the axial direction of the traction sheave (30) are configured in the region enclosed by the projection of the traction sheave pitch circle (310) in the axial direction of the traction sheave (30).

6. The elevator lifted by a dual-motor drive apparatus according to claim 4 or 5, wherein
in the axial direction of the traction sheave (30), each transmission gear of the first gear assembly (2) is located between the traction sheave (30) and the first motor (10); and
in the axial direction of the traction sheave (30), each transmission gear of the second gear assembly (2002) is located between the traction sheave (30) and the second motor (2010);

7. The elevator lifted by a dual-motor drive apparatus according to claim 6, wherein
the axis of each transmission gear of the first gear assembly (2) and the axis of each transmission gear of the second gear assembly (2002) are both helical gears.

8. The elevator lifted by a dual-motor drive apparatus according to claim 7, wherein
the second motor drive apparatus (2001) and the first motor drive apparatus (1) have the same structure;
the second motor (2010) and the first motor (10) have the same structure; and
the second gear assembly (2002) and the first gear assembly (2) have the same structure.

9. The elevator lifted by a dual-motor drive apparatus according to claim 8, wherein
the first gear assembly (2) has N transmission gears, and axes of the N transmission gears are not in the same plane and are spatially arranged in three dimensions, N being an integer greater than 2.

10. The elevator lifted by a dual-motor drive apparatus according to claim 8, wherein
the first motor drive apparatus (1) further has a first gear box (20), each transmission gear of the first gear assembly (2) is configured in the first gear box (20), and the first gear box (20) supports rotation of each transmission gear of the first gear assembly (2).

11. The elevator lifted by a dual-motor drive apparatus according to claim 10, wherein
the first gear assembly (2) comprises an input transmission gear (210), an output transmission gear (220), a first intermediate transmission gear (230), and a second intermediate transmission gear (231);
the input transmission gear (210) is provided with an input rotation shaft (21), and the input rotation shaft (21) is provided with a first bearing (212) and a second bearing (213);
the output transmission gear (220) is provided with an output rotation shaft (22), and the output rotation shaft (22) is provided with a third bearing (222) and a fourth bearing (223);
the first intermediate transmission gear (230), the second intermediate transmission gear (231), and an intermediate transmission rotation shaft (23) are coaxially connected to one another and rotate together;
the intermediate transmission rotation shaft (23) is provided with a fifth bearing (233) and
a sixth bearing (234); and
the first gear box (20) supports rotation of each rotation shaft via a bearing of each rotation shaft.

12. The elevator lifted by a dual-motor drive apparatus according to claim 11, wherein
the first motor (10) uses a cylindrical structure with a radial magnetic field and has a stationary portion (11) and a rotation portion (12); the rotation portion (12) of the first motor and the input transmission gear (210) of the first gear assembly (2) are coaxially connected to one another and rotate together, the traction sheave (30) and the output transmission gear (220) of the first gear assembly (2) are coaxially connected to one another and rotate together, and a rotation speed of the traction sheave (30) is less than a rotation speed of the rotation portion (12) of the first motor.

13. The elevator lifted by a dual-motor drive apparatus according to claim 12, wherein
the number of teeth of the input transmission gear (210) is less than the number of teeth of a transmission gear that meshes with the input transmission gear (210), and the number of teeth of the output transmission gear (220) is greater than the number of teeth of a transmission gear that meshes with the output transmission gear (220).

14. The elevator lifted by a dual-motor drive apparatus according to claim 12, wherein
a projection of the rotation portion (12) of the first motor in the axial direction of the traction sheave (30) is configured in the region enclosed by the projection of the traction sheave pitch circle (310) in the axial direction of the traction sheave (30).

15. The elevator lifted by a dual-motor drive apparatus according to claim 12, wherein
the stationary portion (11) of the first motor has a coil (112), and a projection of the coil (112) in the axial direction of the traction sheave (30) is configured in the region enclosed by the projection of the traction sheave pitch circle (310) in the axial direction of the traction sheave (30).
